# FASCICULE DE BREVET EUROPEEN

(11) **EP 1 184 264 B1**
(45) Date de publication et mention de la délivrance du brevet: **16.03.2005**
(21) Numéro de dépôt: 01402220.6
(22) Date de dépôt: 24.08.2001
(51) Int. Cl.: B62D 21/15, B62D 35/02

(54) **Ensemble de structure de caisse à montage rapide**
Schnellbaukarosseriestruktur
Rapidly mounted body structure

(30) Priorité: 29.08.2000 FR 0011047
(43) Date de publication de la demande: 06.03.2002
(73) Titulaire: Renault s.a.s., 92100 Boulogne Billancourt (FR)
(72) Inventeur: Yvetot, Marc, 75015 Paris (FR)

(56) Documents cités:
- EP-A- 0 311 466
- EP-A- 0 945 328
- DE-A- 19 959 607
- FR-A- 2 548 995
- US-A- 5 593 245
- US-A- 6 099 039

## Description

L'invention concerne un ensemble de structure de caisse de véhicule automobile.

L'invention concerne plus particulièrement un ensemble de structure de caisse de véhicule automobile, du type qui comporte, d'avant en arrière, un élément de structure de caisse qui forme notamment support pour des organes mécaniques du véhicule, et une cellule rigide formant habitacle du véhicule automobile, du type dans lequel l'élément de structure de caisse comporte, dans un premier plan horizontal supérieur, au moins deux longerons longitudinaux supérieurs qui s'étendent vers l'avant à partir de la cellule et, dans un second plan horizontal inférieur, au moins un élément inférieur agencé à l'avant de la cellule, et deux longerons longitudinaux inférieurs qui s'étendent parallèlement en dessous des longerons supérieurs, dont des extrémités avant sont fixées à des jambes de suspension fixées aux longerons supérieurs, et dont des extrémités arrière sont enfilées sur des éléments de réception de l'élément inférieur pour, en cas de choc longitudinal, transmettre à l'élément inférieur une partie des efforts de déformation.

On connaît de nombreux exemples d'ensembles de structure de caisse de ce type, p. ex. voir le brevet DE-A-19959607.

De tels ensembles, montés sur un premier véhicule, permettent, en cas de choc longitudinal avec un deuxième véhicule venant en sens inverse, d'accrocher des organes mécaniques du deuxième véhicule à l'aide des longerons inférieurs pour éviter que, au moment du choc le premier véhicule ne chevauche le deuxième véhicule ou ne pénètre le deuxième véhicule.

Les longerons inférieurs comportent des extrémités avant qui sont liées rigidement aux jambes de suspension, elles-mêmes liées rigidement aux longerons supérieurs. Des parties intermédiaires des longerons inférieurs sont par exemple liées aux longeron supérieurs par l'intermédiaire de tirants verticaux, et des extrémités arrière des longerons inférieurs sont enfilées avec jeu sur des éléments de réception de l'élément inférieur, qui est constitué par exemple par un berceau moteur du véhicule. Cette configuration permet de décharger les longerons supérieurs des efforts de déformation résultant du choc en les dirigeant vers le berceau moteur, créant ainsi une voie de passage d'efforts vers celui-ci.

L'inconvénient de tels ensembles de structure de caisse est leur grande complexité de montage.

En effet, le positionnement des longerons inférieurs par rapport aux jambés de suspension et au berceau moteur et leur fixation aux longerons supérieurs par l'intermédiaire des tirants verticaux nécessitent un grand nombre d'opérations de la part de l'opérateur chargé d'effectuer le montage d'un tel ensemble, ce qui augmente d'autant le coût de revient global d'un véhicule équipé d'un tel ensemble de structure de caisse.

L'opération de montage est d'autant plus délicate qu'une mauvaise orientation des tirants avant leur serrage peut conduire à annuler le jeu qui doit exister entre les longerons inférieurs et les éléments de réception du berceau moteur, créant ainsi une voie pour la remontée vibratoire dans l'élément de structure de caisse.

Pour remédier à cet inconvénient, l'invention propose un ensemble de structure de caisse permettant un montage aisé, rapide, et exempt de risques de mauvais positionnement.

Dans ce but, l'invention propose un ensemble de structure de caisse du type décrit précédemment, caractérisé en ce qu'il comporte un carénage en forme de plaque sensiblement horizontale sur lequel sont fixés les longerons inférieurs, de manière à former, avant leur assemblage sur le véhicule, un sous-ensemble dont des moyens de fixation rapide et de mise en position préalable permettent la mise en position provisoire par rapport au véhicule avant la fixation définitive.

Selon d'autres caractéristiques de l'ensemble :
- le sous-ensemble comporte des boîtiers pour la fixation des longerons inférieurs sur les jambes de suspension, qui sont enfilés sur les extrémités avant des longerons inférieurs, et qui comportent les moyens de fixation rapide du sous-ensemble sur les jambes de suspension du véhicule,
- l'ensemble comporte une traverse qui réunit les jambes de suspension,
- chaque boîtier de fixation comporte au moins une oreille qui s'étend horizontalement et transversalement en direction du boîtier opposé, et qui porte un premier moyen de fixation rapide et de mise en position préalable du sous ensemble qui est destiné à coopérer avec un perçage de la jambe'de suspension associée,
- les moyens de fixation rapide et de mise en position préalable du sous ensemble sont des pions de type sapin comportant chacun une tige verticale surmontée d'une partie conique.

L'invention propose aussi un procédé pour le montage d'un sous ensemble tel que décrit précédemment, caractérisé en ce que, au cours d'une première étape de préparation, les longerons inférieurs sont assemblés au carénage, notamment par vissage, puis en ce que les boîtiers comportant les moyens de fixation rapide sont enfilés sur les extrémités avant des longerons inférieurs, et en ce qu'une barre transversale est fixée aux longerons inférieurs pour former le sous-ensemble.

Selon d'autres caractéristiques du procédé :
- au cours d'une deuxième étape de mise en position, le sous-ensemble est mis en position par rapport au véhicule en enfilant les extrémités arrière des longerons inférieurs sur les éléments de réception de l'élément inférieur et en fixant les moyens de fixation rapide dans les perçages des jambes de suspension,
- dans une troisième étape de fixation définitive, les boîtiers d'extrémité des longerons inférieurs sont vissés définitivement sur les jambes de suspension.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'un ensemble de structure de caisse selon un état antérieur de la technique,
- la figure 2 est une vue en perspective éclatée d'un ensemble de structure de caisse selon l'invention,
- la figure 3 est une vue de détail en perspective illustrant le sous-ensemble selon l'invention,
- la figure 4 est une vue en coupé transversale par le plan 4-4 de la figure 3 d'un boîtier de fixation, et
- la figure 5 est une vue en coupe transversale par le plan 5-5 de la figure 3 d'un longeron inférieur.

Dans la description qui va suivre, des chiffres de référence identiques désignent des pièces identiques ou ayant des fonctions similaires.

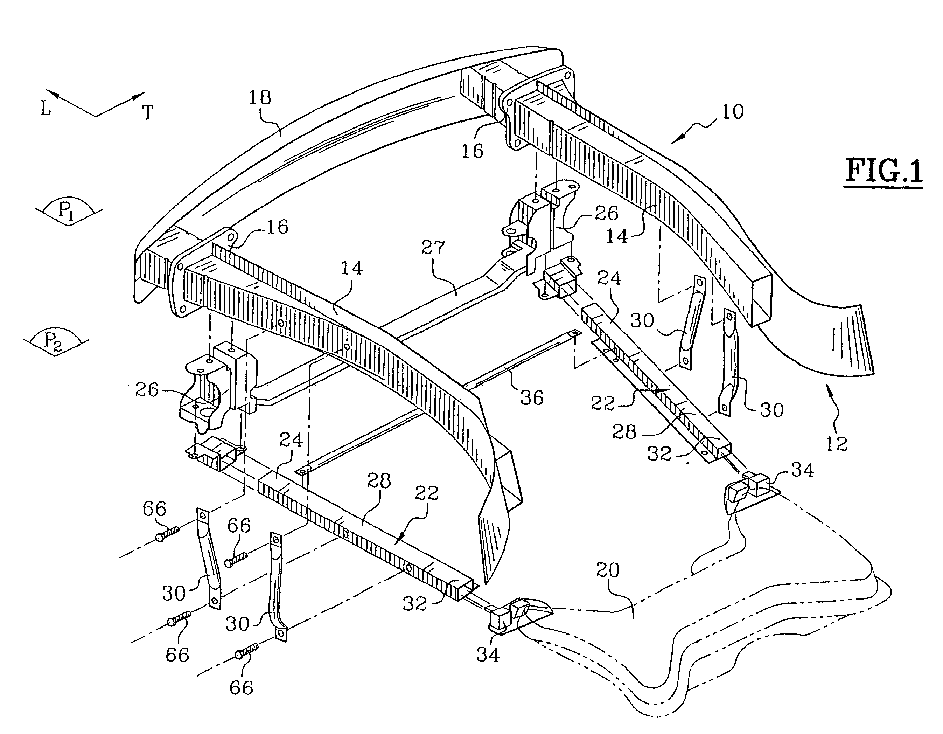

Comme l'illustre la figure 1, de manière connue, un ensemble de structure de caisse est par exemple formé d'une cellule rigide (non représentée) formant habitacle du véhicule automobile, en avant de laquelle s'étend un élément 10 de structure de caisse de direction sensiblement longitudinale "L".

L'élément 10 de structure de caisse est par exemple soudé par point sur la cellule au niveau de son extrémité arrière 12, qui est représentée à droite de la figure 1.

L'élément 10 de structure de caisse comporte, dans un premier plan "P₁" horizontal supérieur, au moins deux longerons 14 longitudinaux supérieurs qui s'étendent vers l'avant à partir de la cellule et dont les extrémités avant 16 sont par exemple réunies par une poutre transversale 18, qui peut notamment servir de support pour un bouclier et/ou une façade avant (non représentés) du véhicule.

Dans un second plan "P₂" horizontal inférieur, l'élément 10 de structure de caisse comporte un élément inférieur 20, notamment un berceau moteur, qui s'étend vers l'avant à partir de la cellule, et deux longerons 22 longitudinaux inférieurs qui s'étendent en dessous et parallèlement aux longerons supérieurs 14. Les longerons inférieurs 22 sont fixés au niveau de leurs extrémités avant 24 à des jambes de suspension 26 qui sont fixées aux longerons supérieurs 14. En particulier, mais de façon non limitative de l'invention, les jambes de suspension 26 sont fixées aux extrémités avant 16 desdits longerons supérieurs 14 et elles sont notamment réunies par une traverse 27. Les jambes 26 de suspension et la traverse 27 sont notamment réalisés en une seule pièce.

Les parties intermédiaires 28 des longerons inférieurs 22 sont par exemple liées chacune au longeron supérieur 14 associé 14 par l'intermédiaire d'au moins un tirant 30, et les extrémités arrière 32 des longerons inférieurs 22 sont agencées avec jeu en regard d'éléments 34 de réception du berceau moteur 20 pour, en cas de choc longitudinal, transmettre au berceau 20 une partie des efforts de déformation.

Lors du montage du véhicule, un tel élément 10 de structure de caisse est particulièrement délicat à assembler.

Dans un montage conventionnel, le véhicule est accroché à un convoyeur qui avance lentement le long de la chaîne de fabrication. Les longerons supérieurs 14 faisant partie de la structure de caisse du véhicule, l'opérateur ou un robot de montage monte d'abord sous les extrémités avant 16 des longerons 14 l'ensemble formé des jambes de suspension 26 et de la traverse 27 qui les réunit.

L'ensemble formé des jambes de suspension 26 et de la traverse 27 est notamment fixé par vissage des jambes de suspension 26 sous les extrémités avant 16 des longerons supérieurs 14.

L'opérateur ou le robot enfile ensuite les extrémités arrière 32 des longerons inférieurs 22 sur les éléments 34 de réception du berceau 20, puis il fixe les extrémités avant 24 des longerons inférieurs 22 sous les jambes de fixation 26. Puis il fixe une barre 36 transversale de rigidification entre les longerons inférieurs 22. Enfin, l'opérateur fixe des tirants 30 entre les longerons supérieurs 14 et les longerons inférieurs 22 à l'aide vis 66.

Le montage de l'élément 10 de structure de caisse est donc particulièrement complexe et nécessite, dans l'état actuel des procédés de montage, un nombre d'opérations tel qu'il est impossible de le réaliser dans le cadre d'un assemblage en grande série du véhicule du fait de la vitesse élevée du convoyeur qui porte la caisse du véhicule.

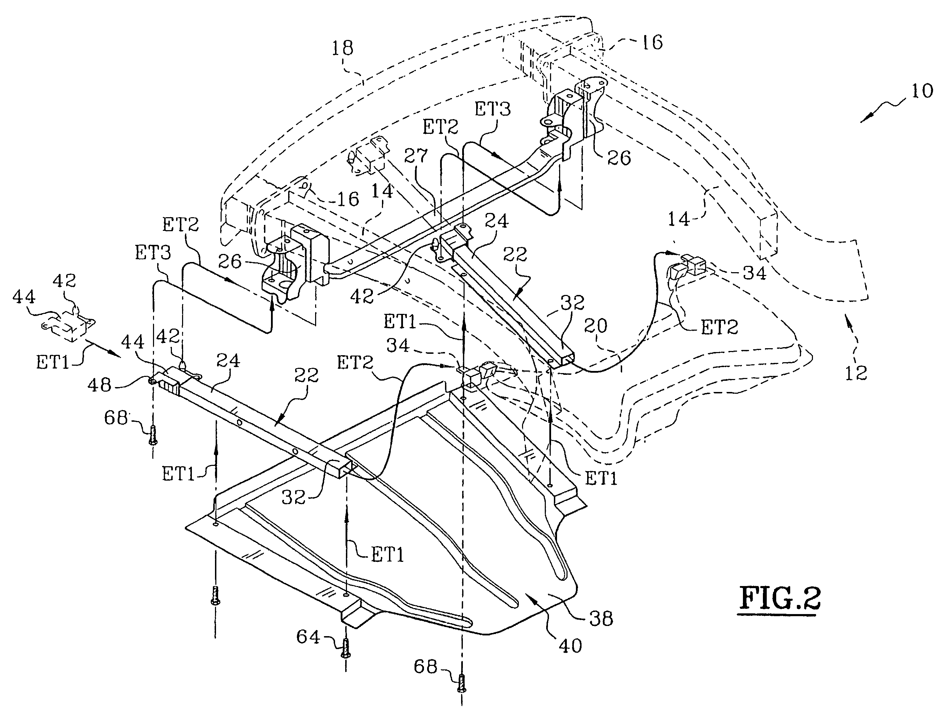

Pour remédier à cet inconvénient, comme l'illustre la figure 2, l'invention propose un ensemble de structure de caisse de véhicule automobile qui comporte un carénage 38 en forme de plaque sensiblement horizontale sur lequel sont fixés les longerons inférieurs 22, de manière à former, avant leur assemblage sur le véhicule, un sous-ensemble 40 pré-assemblé dont des moyens 42 de fixation rapide permettent la mise en position provisoire par rapport au véhicule avant la fixation définitive.

Conformément à l'invention, le carénage 38 présente la forme d'une plaque qui s'étend en dessous des longerons inférieurs 22, transversalement et sensiblement sur toute leur longueur.

Au cours d'une première opération de préparation du sous-ensemble 40, le carénage 38 est, dans une première étape figurée par les flèches ET1, fixé aux longerons inférieurs 22, par exemple par l'intermédiaire de vis 64. Des pions de positionnement, pouvant venir du moulage du carénage 38, assurent une bonne géométrie des longerons inférieurs 22 avant leur fixation avec le carénage 38. Des boîtiers de fixation 44, représentés en vue fantôme, sont enfilés sur les extrémités avant 24 des longerons inférieurs 22. A ce stade, la barre 36 de rigidification précédemment décrite peut être vissée entre les longerons inférieurs 22.

Les deux boîtiers 44 de fixation des longerons inférieurs 22 portent les moyens 42 de fixation rapide. Ces moyens 42 de fixation rapide permettent, une fois montés à l'avant des longerons inférieurs 22 comme représenté à la figure 2, la fixation provisoire des boîtiers 44 sous les jambes de suspension 26.

De la sorte, au cours d'une deuxième étape de mise en position figurée par les flèches ET2, le sous-ensemble 40 peut être fixé provisoirement au véhicule, en enfilant les extrémités arrières 32 des longerons inférieurs sur les éléments 34 de réception du berceau moteur formant l'élément inférieur 20 et en fixant les boîtiers 44 sous les jambes de suspension 26.

L'opération de montage peut alors être terminée en vissant les boîtiers 44 de fixation d'extrémité des longerons inférieurs 22 sous les jambes de suspension 26 au cours d'une troisième étape ET3 de fixation définitive.

Dans un phase ultérieure de l'assemblage du véhicule des tirants 30 analogues à ceux décrits en référence à la figure 1 peuvent être montés par vissage entre les longerons supérieurs 14 et les longerons inférieurs 22.

Il convient de noter que, à titre de variante, ces tirants 30 pourraient être assemblés aux longerons inférieurs 22 lors de l'étape ET1 de préparation par vissage sans serrage de leurs extrémités inférieures sur les longerons inférieurs 22. Toutefois, ce mode de réalisation en variante ne constitue pas le mode de réalisation préféré de l'invention.

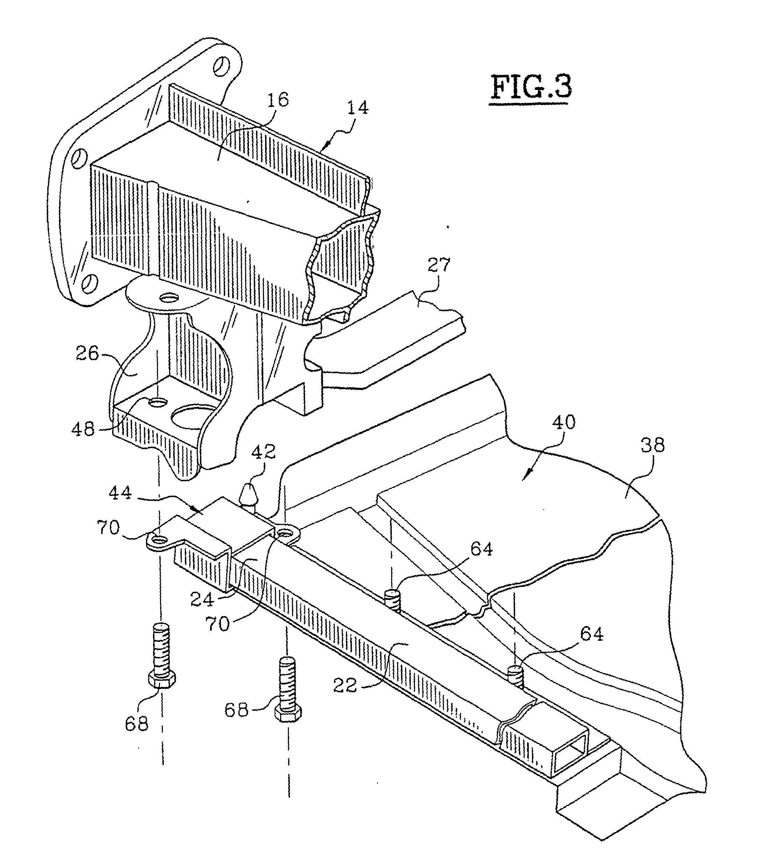

Le détail des moyens de fixation 42 et des boîtiers 44 de fixation a été représenté plus particulièrement aux figures 3 à 5.

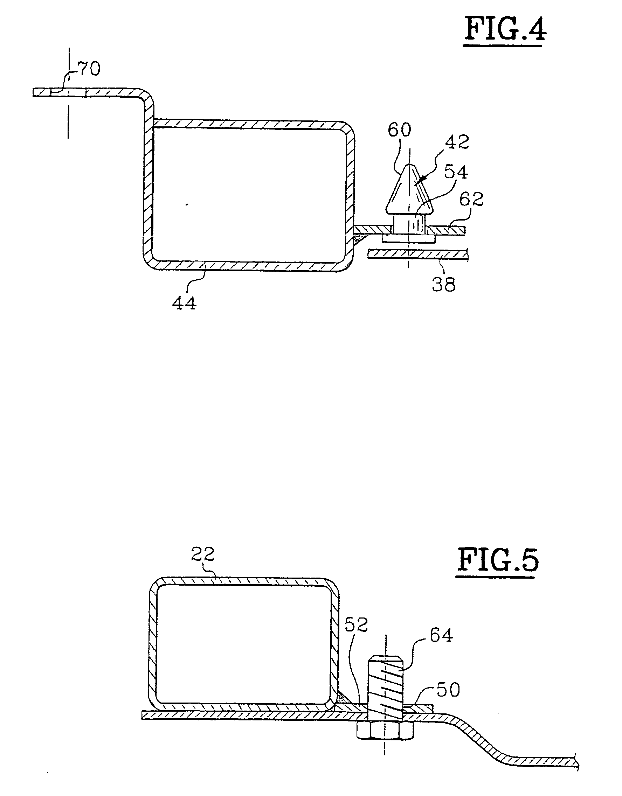

Comme l'illustrent les figures 3 et 5, chaque longeron inférieur 22 comporte par exemple des perçages 50 régulièrement espacés le long d'une aile 52 longitudinale qui s'étend transversalement vers le longeron inférieur 22 opposé. Chaque perçage 50 est destiné à recevoir des vis 64 qui traversent le carénage 38 pour sa fixation sous les longerons 22 inférieurs. En variante, les vis 64 pourraient être avantageusement remplacées par des moyens de fixation rapide.

Comme l'illustrent les figures 3 et 4, chaque boîtier 44 de fixation est intérieurement complémentaire du longeron inférieur 22 et comporte au moins une oreille 62 qui s'étend horizontalement et transversalement en direction du boîtier 44 opposé. Cette oreille 62 porte un premier moyen 42 de fixation rapide qui est agencé en regard d'un perçage (non représenté) de la jambe 26 de suspension associée.

Les moyens 42 rapides de fixation des boîtiers 44 sont des pions dits "en sapins" qui traversent les oreilles 62 de chacun des boîtiers 44 et qui sont représentés plus particulièrement à la figure 4.

Les pions 42 sont chacun formés d'une tige verticale 54 qui est surmontée d'une partie conique 60. La partie conique 60 est destinée à se comprimer en pénétrant dans le perçage associé de la jambe de suspension 26, puis à s'expanser pour retenir le boîtier 44 sous la jambe 26. La partie conique remplit par ailleurs une fonction de centrage dans le perçage associé de la jambe de suspension 26.

Dans le mode de réalisation qui a été représenté à la figure 4, la tige verticale 54 ne traverse que l'oreille 62 et le carénage 38 est agencé avec jeu sous l'oreille 62, mais, en variante, le carénage 38 pourrait être au contact de l'oreille 62 et dans ce cas la tige verticale traverserait à la fois l'oreille 62 et le carénage 38.

En variante (non représentée), les pions dits "en sapin" pourraient comporter une tige à partir de laquelle s'étendrait radialement une pluralité de lames élastiques agencées en chevron.

II sera compris que tout autre moyen rapide de fixation peut être utilisé pour la réalisation des moyens 42 rapides de fixation.

De la sorte, le sous-ensemble 40 ayant été pré-assemblé au cours de l'étape ET1, le sous ensemble 40 peut avantageusement être mis en position au cours de l'étape ET2 de façon très aisée sous les jambes de suspension 26, le montage ne nécessitant plus que le vissage au cours de l'étape ET3 des vis 68 traversant des perçages 70 des boîtiers 44 pour leur fixation dans des perçages 48 des jambes 26 de suspension.

L'invention permet donc avantageusement d'obtenir un élément 10 de structure de caisse qui peut être monté sous le véhicule par un seul opérateur dans le cadre d'un assemblage sur une chaîne de fabrication de grande série.

Il sera compris qu'un avantage supplémentaire de l'invention est de aussi permettre l'automatisation de l'opération de mise en place du sous-ensemble sous le véhicule.

## Revendications

1. Ensemble de structure de caisse de véhicule automobile, du type qui comporte, d'avant en arrière, un élément (10) de structure de caisse qui forme notamment support pour des organes mécaniques du véhicule, et une cellule rigide formant habitacle du véhicule automobile, du type dans lequel l'élément (10) de structure de caisse comporte, dans un premier plan (P₁) horizontal supérieur, au moins deux longerons (14) longitudinaux supérieurs qui s'étendent vers l'avant à partir de la cellule et, dans un second plan horizontal (P₂) inférieur, au moins un élément inférieur (20) agencé à l'avant de la cellule, et deux longerons longitudinaux inférieurs (22) qui s'étendent parallèlement en dessous des longerons supérieurs (14), dont des extrémités avant (24) sont fixées à des jambes de suspension (26) fixées aux longerons supérieurs (14), et dont des extrémités arrière (32) sont enfilées sur des éléments de réception (34) de l'élément inférieur (20) pour, en cas de choc longitudinal, transmettre à l'élément inférieur (20) une partie des efforts de déformation,
**caractérisé en ce qu'**il comporte un carénage (38) en forme de plaque sensiblement horizontale sur lequel sont fixés les longerons inférieurs (22), de manière à former, avant leur assemblage sur le véhicule, un sous-ensemble (40) dont des moyens (42) de fixation rapide et de mise en position préalable permettent la mise en position provisoire par rapport au véhicule avant la fixation définitive.

2. Ensemble selon la revendication 1, **caractérisé en ce que** le sous-ensemble (40) comporte des boîtiers (44) pour la fixation des longerons inférieurs (22) sur les jambes de suspension (26), qui sont enfilés sur les extrémités avant (24) des longerons inférieurs (22), et qui comportent les moyens (42) de fixation rapide du sous-ensemble (40) sur les jambes (26) de suspension du véhicule.

3. Ensemble selon la revendication précédente, **caractérisé en ce qu'**il comporte une traverse (27) qui réunit les jambes (26) de suspension.

4. Ensemble selon la revendication précédente, **caractérisé en ce que** chaque boîtier (44) de fixation comporte au moins une oreille (62) qui s'étend horizontalement et transversalement en direction du boîtier (44) opposé, et qui porte un premier moyen (42) de fixation rapide et de mise en position préalable du sous ensemble (40) qui est destiné à coopérer avec un perçage de la jambe de suspension (26) associée.

5. Ensemble selon la revendication 4, **caractérisé en ce que** les moyens (42) de fixation rapide sont des pions de type sapin comportant chacun une tige verticale (54) surmontée d'une partie conique (56).

6. Procédé pour le montage d'un sous ensemble (40) selon les revendications 1 à 5, **caractérisé en ce que**, au cours d'une première étape de préparation (ET1), les longerons inférieurs (22) sont assemblés au carénage (38), notamment par vissage, puis **en ce que** les boîtiers (44) comportant les moyens (42) de fixation rapide sont enfilés sur les extrémités avant (24) des longerons inférieurs (22), et **en ce qu'**une barre transversale (36) est fixée aux longerons inférieurs (24) pour former le sous-ensemble (40).

7. Procédé de montage d'un sous-ensemble (40) selon la revendication 6, **caractérisé en ce que**, au cours d'une deuxième étape (ET2) de mise en position, le sous-ensemble (40) est mis en position par rapport au véhicule en enfilant les extrémités arrière (32) des longerons inférieurs (22) sur les éléments (34) de réception de l'élément inférieur (20) et en fixant les moyens (42) de fixation rapide dans les perçages des jambes de suspension (26).

8. Procédé de montage d'un sous-ensemble (40) selon la revendication 7, **caractérisé en ce que**, dans une troisième étape (ET3) de fixation définitive, les boîtiers (44) d'extrémité des longerons inférieurs (22) sont vissés définitivement sur les jambes de suspension (26).

## Patentansprüche

1. Kraftfahrzeuggehäusestrukturbaugruppe, von dem Typ, welcher umfasst, von vorne nach hinten, ein Gehäusestrukturelement (10), welches insbesondere Auflage für mechanische Einrichtungen des Fahrzeugs bildet, und eine steife Zelle, welche eine Fahrgastzelle des Kraftfahrzeugs bildet, von dem Typ, in welchem das Gehäusestrukturelement (10) umfasst, in einer ersten oberen horizontalen Ebene (P₁), wenigstens zwei obere longitudinale Längsträger (14), die sich ausgehend von der Zelle nach vorne erstrecken und, in einer unteren zweiten horizontalen Ebene (P₂), wenigstens ein unteres Element (20), welches vorne an der Zelle angeordnet ist, und zwei untere longitudinale Längsträger (22), welche sich parallel unter den oberen Längsträgern (14) erstrecken, deren vordere Enden (24) an Aufhängungsarmen (26) befestigt sind, die an die oberen Längsträger (14) befestigt sind, und deren hintere Enden (32) auf Aufnahmeelemente (34) des unteren Elementes (20) eingefädelt sind, um, im Falle eines longitudinalen Aufpralls, einen Teil der Verformungskräfte an das untere Element (20) zu übertragen,
**dadurch gekennzeichnet, dass** es einen Kiel (38) in Form einer im Wesentlichen horizontalen Platte oder eines Schildes umfasst, auf welchen die unteren Längsträger (22) befestigt sind, um vor ihrer Montage auf das Fahrzeug eine Unterbaugruppe (40) zu bilden, deren Mittel (42) zur Schnellbefestigung und zur vorherigen Positionierung die provisorische Positionierung im Verhältnis zum Fahrzeug vor der Endbefestigung erlauben.

2. Baugruppe nach Anspruch 1, **dadurch gekennzeichnet, dass** die Unterbaugruppe (40) Gehäuse (44) für die Befestigung der unteren Längsträger (22) auf den Aufhängungsarmen (26) umfasst, die auf den vorderen Enden (24) der unteren Längsträger (22) eingefädelt sind, und welche die Mittel (42) zur Schnellbefestigung der Unterbaugruppe (40) auf den Armen (26) der Aufhängung des Fahrzeugs umfassen.

3. Baugruppe nach dem vorhergehenden Anspruch, **dadurch gekennzeichnet, dass** sie einen Querbalken (27) umfasst, welcher die Aufhängungsarme (26) verbindet.

4. Baugruppe nach dem vorhergehenden Anspruch, **dadurch gekennzeichnet, dass** jedes Gehäuse (44) der Befestigung wenigstens ein Ohr (62) umfasst, welches sich horizontal und transversal in Richtung des gegenüberliegenden Gehäuses (44) erstreckt, und welches ein erstes Mittel (42) der Schnellbefestigung und der vorherigen Positionierung der Unterbaugruppe (40) trägt, das dazu bestimmt ist, mit einer Bohrung des zugeordneten Aufhängungsarms (26) zusammenzuwirken.

5. Baugruppe nach Anspruch 4, **dadurch gekennzeichnet, dass** die Mittel (42) zur schnellen Befestigung Stifte vom tannenbaumförmigen Typ sind, welche jeder einen vertikalen Schaft (54) umfasst, überstiegen von einem konischen Abschnitt (56).

6. Verfahren für die Montage einer Unterbaugruppe (40) nach den Ansprüchen 1 bis 5, **dadurch gekennzeichnet, dass**, im Verlauf eines ersten Schrittes der Vorbereitung (ET1), die unteren Längsträger (22) an den Kiel (38) befestigt werden, insbesondere durch Schrauben, und dass danach die Gehäuse (44), welche die Mittel (42) zur Schnellbefestigung umfassen, auf die vorderen Enden (24) der unteren Längsträger (22) eingefädelt werden, und dadurch, dass ein transversaler Balken (36) an die unteren Längsträger (24) befestigt wird, um die Unterbaugruppe (40) zu bilden.

7. Verfahren zur Montage einer Unterbaugruppe (40) nach Anspruch 6, **dadurch gekennzeichnet, dass**, im Verlauf eines zweiten Schritts (ET2) der Positionierung, die Unterbaugruppe (40) im Verhältnis zum Fahrzeug in Position gebracht wird, indem die hinteren Enden (32) der unteren Längsträger (22) auf den Elementen (34) zur Aufnahme des unteren Elements (20) eingefädelt werden, und indem die Mittel (42) zur schnellen Befestigung in den Bohrungen der Aufhängungsarme (26) befestigt werden.

8. Verfahren zur Montage einer Unterbaugruppe (40) nach Anspruch 7, **dadurch gekennzeichnet, dass** in einem dritten Schritt (ET3) der Endbefestigung die Gehäuse (44) des Endes der unteren Längsträger (22) endgültig auf die Aufhängungsarme (26) geschraubt werden.

## Claims

1. Motor vehicle body structure assembly of the type comprising, from front to rear, a body structure component (10) that in particular forms a support for mechanical units of the vehicle, and a rigid cell forming the passenger compartment of the motor vehicle, of the type in which the body structure component (10) comprises, in first upper horizontal plane (P₁), at least two upper longitudinal side members (14) that extend forwards from the cell and, in a second lower horizontal plane (P₂), at least one lower component (20) fitted at the front of the cell, and two lower longitudinal side members (22) that extend underneath and parallel to the upper side members (14), front ends (24) of which are fixed to suspension struts (26) fixed to the upper side members (14), and rear ends (32) of which are pushed onto receiving components (34) on the lower component (20) in order to transmit some of the deformation force to the lower component (20) in the event of a longitudinal impact,
**characterised in that** it comprises a fairing (38) in the form of an approximately horizontal plate onto which the lower side members (22) are fixed, in such a way as to form, before they are fitted onto the vehicle, a sub-assembly (40) on which rapid fixing and preliminary positioning means (42) allow for provisional positioning relative to the vehicle before final fixing.

2. Assembly according to claim 1, **characterised in that** the sub-assembly (40) comprises units (44) for fixing the lower side members (22) to the suspension struts (26) that are pushed onto the front ends (24) of the lower side members (22) and comprise means (42) of rapidly fixing the sub-assembly (40) to the suspension struts (26) on the vehicle.

3. Assembly according to the previous claim, **characterised in that** it comprises a cross member (27) that links the suspension struts (26).

4. Assembly according to the previous claim, **characterised in that** each fixing unit (44) comprises at least one lug (62) that extends horizontally and transversely towards the opposite unit (44), and that holds a first rapid fixing and preliminary positioning means (42) of the sub-assembly (40) that is designed to cooperate with a hole in the associated suspension strut (26).

5. Assembly according to claim 4, **characterised in that** the rapid fixing means (42) are fir-tree type pins each comprising a vertical shank (54) topped by a conical section (56).

6. Method for the assembly of a sub-assembly (40) according to claims 1 to 5, **characterised in that**, during a first preparation stage (ET1), the lower side members (22) are fitted to the fairing (38), in particular by screwing, **in that** the units (44) comprising the rapid fixing means (42) are pushed onto the front ends (24) of the lower side members (22), and **in that** a transverse bar (36) is fixed to the lower side members (24) to form the sub-assembly (40).

7. Method of assembling a sub-assembly (40) according to claim 6, **characterised in that**, during a second positioning stage (ET2), the sub-assembly (40) is positioned relative to the vehicle by pushing the rear ends (32) of the lower side members (22) onto the receiving components (34) on the lower component (20) and by fixing the rapid fixing means (42) into the holes in the suspension struts (26).

8. Method of assembling a sub-assembly (40) according to claim 7, **characterised in that**, in a third final fixing stage (ET3), the units (44) on the ends of the lower side members (22) are permanently screwed to the suspension struts (26).
